# EUROPEAN PATENT APPLICATION

(11) **EP 4 140 375 A1**
(43) Date of publication of application: **01.03.2023**
(21) Application number: 21192764.5
(22) Date of filing: 24.08.2021
(51) Int. Cl.: A47J 43/07

(54) **FOOT UNIT FOR KITCHEN APPLIANCE, AND KITCHEN APPLIANCE**

(71) Applicant: BSH Hausgeräte GmbH, 81739 München (DE)
(72) Inventor: Brecko, Ales, 3000 Celje (SI); Knez, Simon, 3311 Sempeter v savinjski dollini (SI); Semeja, Uros, 3327 Smartno ob Paki (SI)

(57) **Abstract**

Disclosed is a foot unit 100 for a kitchen appliance, the foot unit comprising a suction component 10 and a sensing component 20. The suction component 10 is configured to hold a vacuum between the suction component and an even support S for the kitchen appliance. The sensing component 20 comprises an at least partially elastic deflection portion 21. Therein, the suction component 10 is connected or connectable to the sensing component 20 by means of a form-locking plug connection C comprising at least one orifice 11 and at least one pin 22 inserted or configured to be inserted in the orifice 11.

Further disclosed is a kitchen appliance 1000 comprising at least one such foot unit 100 and one or more detection means configured to detect a respective deflection of the deflection portion 21 of the sensing component 20, thereby providing a weighing function of the kitchen appliance 1000.

## Description

The present invention concerns a foot unit of or for a kitchen appliance. Furthermore, the invention concerns a kitchen appliance with one or more such foot unit/s.

Many kitchen appliances are intended to be arranged, with at least a component (e.g., a base unit) thereof, on a support such as a table or other worktop. To reduce a contact surface, the kitchen appliance may be provided with one or more foot unit/s, which may advantageously be detachably fixable to the support. Thereby, unwanted movements of said component, such as shifts caused by a user inadvertently striking against it, can be prevented. In particular, to facilitate the fixation, the foot units may comprise at least one vacuum cup.

Advantageous kitchen appliances further provide a weighing function enabling a user to directly weigh out respective ingredients. The function may be implemented by one or more sensors detecting a respective weight by which one or more foot unit(s) of the kitchen appliance are loaded.

The present invention targets at providing a technique improving a kitchen appliance with a weighing function.

The object is achieved by a foot unit according to claim 1 and by a kitchen appliance according to claim 9. Advantageous embodiments are disclosed in the dependent claims, the description and the figures.

A foot unit according to the present invention is a construction part of or for a kitchen appliance. It comprises a suction component and a sensing component. The suction component is configured to hold a vacuum between the suction component and an even support the kitchen appliance may be placed on. The sensing component comprises an at least partially elastic deflection portion. In particular, the deflection portion may be configured to deflect in a direction away from the suction component.

The suction component is connected or connectable to the sensing component (preferably, to the deflection portion thereof) by means of a form-locking plug connection comprising at least one orifice and at least one pin inserted or configured to be inserted in the orifice.

Due to the form-locking plug connection with the pin in the orifice, the present invention facilitates an advantageously flexible stand of a respective kitchen appliance comprising such foot unit, as such plug connection in particular can absorb shearing forces which may be accidentally applied to the kitchen appliance in a direction parallel to the support. Nonetheless, the form-locking plug connection transfers weight forces respectively to be measured, and provides a safe fastening to the respective support.

According to advantageous embodiments, the plug connection joins or is configured to join the suction component to a centre of the sensing component. Such embodiments allow a transmission of axial forces (i.e., forces pressing the sensing component towards or against the suction component, in particular forces in a direction orthogonal to a surface of the respective support to which the respective foot unit may be fastened by vacuum) directly to the centre of the sensing component. Thereby, a weighing accuracy can be improved.

The deflection portion of the sensing component may include a tongue with a free end configured to be displaced, under load, relative to an opposite end of the tongue (preferably away from the suction component when this is connected to the sensing component). In such embodiments, the plug connection may preferably join or be configured to join the suction component to the free end. The free end may in particular be positioned in a centre of the sensing component.

The suction component may comprise at least one vacuum cup; in particular, such vacuum cup may advantageously be at least partially made of an elastic material such as at least one elastomer. Preferably, the suction component of such embodiment further comprises a base element thereof, which may be connected to the at least one vacuum cup, e.g., by form-fitting and/or adhesive connection means. The base element and the at least one vacuum cup may differ from each other with respect to their respective material/s. In particular, the base element may preferably be at least partially made of a material which is more resistant to deformation (in particular, has a higher modulus of elasticity) than the at least one vacuum cup. For example, the base element may be at least partially made of plastic and/or metal. Thereby, the base element can improve the stability of the suction component and/or the durability of the form-locking plug connection.

The sensing component (in particular the deflection portion thereof) may be entirely or partially made of metal and/or plastic.

In utilisation of the foot unit (in particular, when the foot unit is mounted to a bottom of the kitchen appliance), a respectively current degree of deflection of the deflection portion is preferably detectable by detection means (possibly, but not necessarily comprised by the foot unit), which degree may reflect a force (in particular a mass) acting on the foot unit.

The sensing component may extend along a plane when the deflection portion is unstressed (i.e., not deflected by load). In particular, it may be formed of a flat plate.

According to advantageous embodiments, the sensing component comprises a frame at least partially surrounding the deflection portion. The frame and the deflection portion of such embodiments may be both form part of a common monolithic element, in particular of a monolithic plate.

The deflection portion of the sensing component may have a curved shape; for instance, it may comprise an angled portion and/or a portion forming a spiral. Preferably, a curve (in particular, angle) such deflection portion may form runs in a plane orthogonal to a possible deflection direction (in which the deflection portion is configured to deflect).

In particular, in respective embodiments where the deflection portion comprises a tongue with a free end as mentioned above, the tonque may preferably have an angled and/or spiral shape. Thereby, a particularly large angle about which the deflection portion is deflected, by a respective force applied to the sensing component in a direction towards the suction portion (in particular, a force resulting from a particular mass to be weighed by a kitchen appliance comprising the foot unit), can be achieved, which provides a particularly accurate weighing function.

The at least one pin of the form-locking plug connection may stick out of the deflection portion (in particular, in respective embodiments, at a free end of a tongue the deflection portion may comprise as mentioned above). In particular, a centre axis of the at least one pin may run in a direction orthogonal to a plane along which the sensing component may extend. Advantageously, the pin may be riveted in the deflection portion; for instance, the pin may extend through a hole which may be formed in the deflection portion.

In such embodiments, the at least one orifice is preferably formed as a hole in the suction component. In embodiments where the suction component comprises a base element as mentioned above, such hole may be formed in the base element.

These embodiments facilitate a particularly accurate weighing function, as they provide a particularly precise force transfer to the deflection portion.

Alternatively, the at least one pin may be formed as a protrusion of the suction component, such as - in respective embodiments - of a base element the suction component may comprise. In these cases, the at least one orifice may advantageously be configured as an opening in the deflection portion (in particular, at a centre thereof).

Such embodiments likewise provide a particularly precise force transfer to the deflection portion and, thereby, they facilitate a particularly accurate weighing function.

The pin may have a first portion and a second portion, wherein with respect to a centre axis of the pin, the first portion may be radially thickened compared to the second portion.That is, the first portion may have a larger radial diameter (i.e., diameter in radial direction with respect to the centre axis of the pin) than the second portion. At least when the pin is inserted in the orifice (thus, when the suction component is connected with the sensor component), the second portion of the pin is preferably positioned between the first portion of the pin and the deflection portion of the sensor component. In particular, the first portion may be shaped as an spheroidal cap (in particular as a spherical cap), or shaped cylindrically, as a plate (in particular as a disc) or as a lens.

Such embodiments facilitate that a respective part forming the orifice (thus - depending on the respective embodiment - the suction portion or the sensing component) can firmly hold the first portion of the pin (by at least partially encompassing it in a direction reverse to an insertion direction of the pin), which provides a particularly reliable form-locking plug connection.

Advantageously, the orifice of the form-locking plug connection includes a widening portion, which widens along a designated insertion direction of the at least one pin. In the reverse direction, the orifice thus narrows, i.e., the respective part forming the orifice (such as the suction portion or the sensing component, depending on the embodiment) forms an overhang. Thereby, the stability of the form-locking plug connection is increased. In particular, if a force in a direction away from the suction portion (in particular, in a direction opposite to the designated insertion direction) is applied to the sensing component, the force is advantageously transferred to the suction portion.

According to advantageous embodiments, when the suction component is connected to the sensing component, a slot is formed which separates at least a portion of the sensing component from at least a portion of the suction component. Preferably, the slot entirely or at least partially surrounds at least a portion of the at least one pin. Thereby, a particularly accurate weighing function can be achieved, as a force resulting from a mass pressing the sensing component towards the suction component is directly (and preferably exclusively) passed on to the pin and, thereby, to the deflection portion.

Advantageously, when the suction component is connected (via the form-locking plug connection) to the sensing component, the suction component is inclinable, relative to the sensing component. In particular, such inclination may comprise a pivoting, of the suction component or of the sensing component, about a portion of the pin.

Additonally or alternatively, the sensing component may preferably be rotatable, about a centre axis of the pin, relative to the suction component. In particular, the pin and/or the orifice may preferably be entirely or at least partially rotationally symmetric.

Such embodiments facilitate a movability of the suction portion relative to the sensing component or - in respective embodiments - even relative to a fixture of the sensing component, which fixture may be configured to fasten the sensing component to a bottom of the kitchen appliance. In particular, such fixture may be configured to hold the sensing component so as to extend through an opening in a bottom shell of the kitchen appliance (in particular of a base unit thereof). Thereby, in particular, shearing forces accidentally acting upon the kitchen appliance comprising the foot unit can be absorbed particularly effectively.

A kitchen appliance according to the present invention comprises one or more foot unit/s according to an embodiment of the present invention. The kitchen appliance further comprises one or more detection means configured to detect a respectively current deflection of the (respective) deflection portion of the foot unit/s (namely, of its/their respective sensing component). Thereby, a weighing function of the kitchen appliance is implemented.

In particular, the kitchen appliance according to the present invention thus is adapted to weigh material burdening, directly or within a food receptacle, a designated weighing surface of the kitchen appliance. Therein the kitchen appliance is particularly resistant against shearing forces. The kitchen appliance may further comprise such food receptacle.

According to preferable embodiments, the kitchen appliance may comprise a base unit to which the one or more foot unit/s may be fastened. Such base unit may include an electric motor configured to drive at least one tool for treating food (e.g., in respective embodiments, food contained in the food receptacle), and/or a heater configured to heat food (e.g., in respective embodiments, food contained in the food receptacle). Additionally or alternatively, the base unit may have a designated position surface for positioning a food receptacle.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

In the context of this patent application, the term orifice shall be construed to have a broader meaning including, e.g. a recess. Moreover, the terms hole and opening can be used interchangeably.

Shown is schematically in
- Fig. 1:: an exemplary embodiment of a foot unit according to the present invention;
- Fig. 2a:: the foot unit of Figure 1 in a combined state
- Fig. 2b:: a detail view of Figure 2a;
- Fig. 3:: the foot unit of Figures 1 and 2a as fastened to a portion of a kitchen appliance; and
- Fig. 4:: a kitchen appliance according to an exemplary embodiment of the present invention.

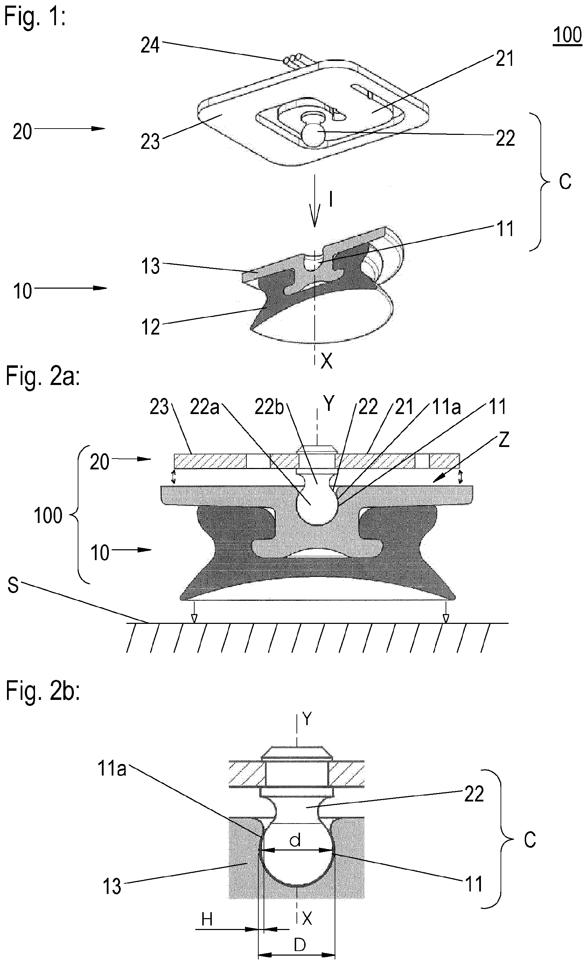

Figure 1 illustrates a foot unit 100 according to an exemplary embodiment of the present invention. The foot unit 100 comprises a suction component 10, a half of which is shown, in Figure 1, in a partial cross section providing in-sight into the inner structure of the suction component 10. Thereby, it is discernible that the suction component 10 comprises a vacuum plug 12 and a base element 13 fixed to the vacuum plug 12 in a centre region thereof by form-fitting connection means.

Preferably, the base element 13 and the vacuum cup 12 differ from each other with respect to their respective material/s. For instance, the vacuum cup 12 may at least partially be made of at least one elastomer, and the base element 13 may be at least partially made of a (preferably rigid) plastic. The suction component 10 shown in Figure 1 is rotationally symmetric about a centre axis X.

The foot unit 100 further comprises a sensing component 20 which in Figure 1 is shown in perspective view. The sensing component 20 comprises an at least partially elastic deflection portion 21 which in the exemplary embodiment depicted is formed as a flat, curved tongue having spiral shape. The deflection portion 21 is surrounded by a frame 23 further comprised by the sensing component 20. The deflection portion 21 in particular is deflectable relative to the frame 23. The deflection portion 21 and the frame 23 both form part of a monolithic plate.

The deflection portion 21 is connected or connectable to detection means (of which only connection lines 24 are visible in Figure 1) for detecting a respective degree of deflection of the deflection portion 21, the degree reflecting a respective load acting on the deflection portion 21. Thereby, the foot unit 100 may by used to provide a weighing function of the kitchen appliance.

A pin 22 sticking out, at a centre of the sensing component 20, from the deflection portion 21 at a free end of the spiral tongue formed thereof is configured to be inserted, in the designated insertion direction I, into an orifice 11 formed in a centre region of the base element 13 of the suction component 10. Therein, the insertion direction I runs parallel to the centre axis X of the suction component 10. The pin 22 and the orifice 11 together form a form-locking plug connection C for connecting the suction component 10 and the sensing component 20 to each other.

In Figure 2a, the foot unit 100 is shown in a cross section and with the suction component 10 being connected to the sensing component 20. As further indicated in Figure 2a, the suction component 10 is configured to be pressed on a support S; thereafter, the suction component 10 will hold a vacuum between the vacuum cup and the support S, which vacuum fastens the foot unit 100 to the support.

In the connected state illustrated in Figure 2a, a slot Z separates the deflection portion 21 and the frame 23 of the sensing component 20 from the suction component 10. In the embodiment shown, the slot entirely surrounds a portion of a pin 22, such that the only connection of the suction component 10 with the sensing component is given by the pin 22 inserted in the orifice 11. As a consequence, a force eventually pressing the frame 23 of the sensing component 20 towards the support S will be transferred, via the pin 22, to the deflection portion 21 and thereby cause a corresponding deflection thereof (in a direction reverse to the direction of said force). By detecting the deflection, a dimension of the force can be precisely ascertained. In particular, the foot unit 100 thus serves to provide a weighing function of a respective kitchen appliance comprising it.

The pin 22 is rotationally symmetric about a centre axis Y thereof which in the foot element's combined state shown in Figure 2a coincides with the centre axis X (see Figure 1) of the suction component 10. The pin 22 comprises a spherical first portion 22a which in the state shown in Figure 2a is held in the orifice 11 and about which the sensing portion 20 is inclinable relative to the suction portion 10, as indicated by respective arrows. As a consequence, the foot element 100 is advantageously able to absorb shearing forces eventually acting on the foot unit 100 in a direction parallel to a surface of the support S.

The first portion 22a is radially (with regard to the centre axis Y) thickened compared to a second portion 22b. In the state shown in Figure 2a, in which the suction component is connected to the sensing component, the second portion 22b is positioned between the first portion 22a and the deflection portion 21.

The orifice 11 comprises a widening portion 11a, in which the orifice 11 widens when following the designated insertion direction I referenced in Figure 1. As indicated in the detail view provided by Figure 2b, the base element 13 of the suction component 10 thus forms an overhang H providing for an improved stability of the form-locking plug connection C, in particular facilitating transfer of pulling forces. In particular, the orifice 11 partially encompasses the first portion 22a of the pin in a direction reverse to the insertion direction I.

Furthermore, a diameter d of the first portion 22a is preferably smaller than a diameter D of the orifice 11. As a consequence, the sensing component 20 may preferably be rotatable, about the pin 22 (in particular about the centre axis Y thereof), relative to the suction component 10, the rotation causing little friction.

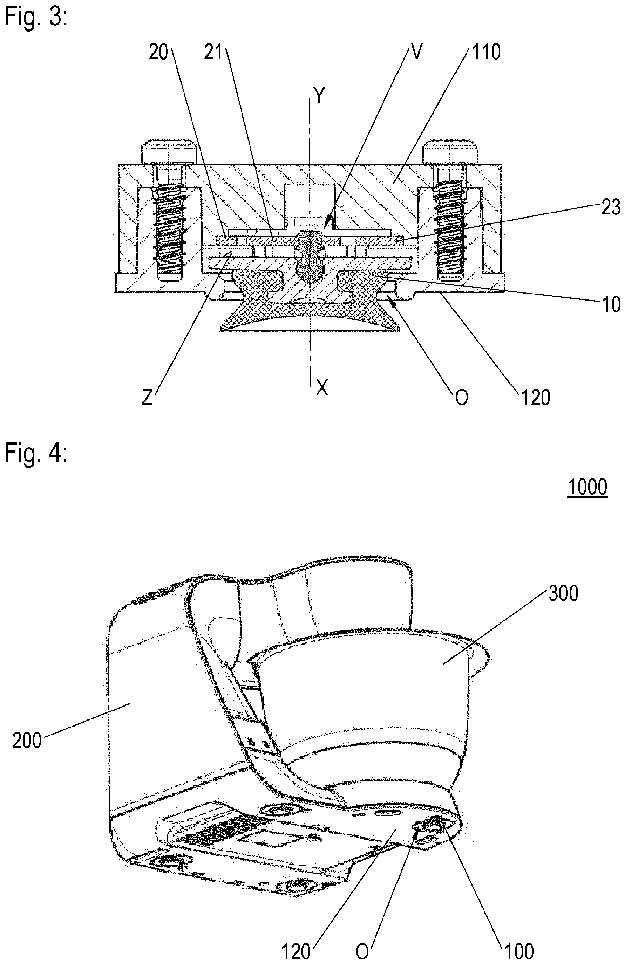

In Figure 3, a portion of a kitchen appliance is shown, in a cross-sectional view, with the foot element 10 of Figures 1 and 2a fastened thereto. Therein, the frame 23 of the sensing component 20 is held, in a fixture 110, so as to extend through an opening O in a bottom shell 120 of the kitchen appliance (e.g., of a base unit thereof). A cavity V in the fixture 110 permits a deflection of the deflection portion 21 away from the suction component 10 when a load acts on the fixture 110 and, therewith, on the frame 23 of the sensing component 20.

In Figure 4, a kitchen appliance 1000 according to an embodiment of the present invention is shown in perspective view. The kitchen appliance comprises a base unit 200 and a food receptacle 300 which in the situation depicted is placed on a designated position of the base unit 200. Moreover, the exemplary kitchen appliance 1000 shown in Figure 4 comprises four feet, at least one of which is configured as a foot unit 100 according to an embodiment of the present invention and fastened to the base unit 200 to as to extend through an opening O in a bottom shell 120 of the base unit 200 (and thereby, of the kitchen appliance 1000). One or more detection means further comprised by the kitchen appliance 1000 and configured to detect a respective deflection of the deflection portion 21 of the sensing component 20, thereby providing a weighing function of the kitchen appliance, are arranged within a housing of the base unit 200 and, therefore, not visible in Figure 4.

Disclosed is a foot unit 100 for a kitchen appliance, the foot unit comprising a suction component 10 and a sensing component 20. The suction component 10 is configured to hold a vacuum between the suction component and an even support S for the kitchen appliance. The sensing component 20 comprises an at least partially elastic deflection portion 21. Therein, the suction component 10 is connected or connectable to the sensing component 20 by means of a form-locking plug connection C comprising at least one orifice 11 and at least one pin 22 inserted or configured to be inserted in the orifice 11.

Further disclosed is a kitchen appliance 1000 comprising at least one such foot unit 100 and one or more detection means configured to detect a respective deflection of the deflection portion 21 of the sensing component 20, thereby providing a weighing function of the kitchen appliance 1000.

### Reference signs

- 10: suction component
- 11: orifice
- 11a: widening portion
- 12: vacuum cup
- 13: base element
- 20: sensing component
- 21: deflection portion
- 22: pin
- 22a: first portion of pin
- 22b: second portion of pin
- 23: frame
- 24: connection lines

- 110: fixture
- 120: bottom shell
- 100: foot unit
- 200: base unit
- 300: receptacle

- 1000: kitchen appliance

- C: form-locking plug connection
- d: diameter of the first portion of the pin
- D: diameter of the orifice
- H: overhang
- I: insertion direction
- O: opening
- S: support
- V: cavity
- X: centre axis of suction component
- Y: centre axis of the pin
- Z: slot

## Claims

1. Foot unit (100) of or for a kitchen appliance, the foot unit comprising
- a suction component (10) configured to hold a vacuum between the suction component and an even support (S) for the kitchen appliance; and
- a sensing component (20) comprising an at least partially elastic deflection portion (21),
wherein the suction component (10) is connected or connectable to the sensing component (20) by means of a form-locking plug connection (C) comprising at least one orifice (11) and at least one pin (22) inserted or configured to be inserted in the orifice (11).

2. Foot unit according to claim 1, wherein the plug connection (C) joins or is configured to join the suction component (10) to a centre of the sensing component (20).

3. Foot unit according to one of claims 1 or 2, wherein
- the at least one pin (22) sticks out of the deflection portion (21), and the at least one orifice (11) is a hole formed in the suction component (10), or
- the at least one pin is formed as a protrusion of the suction component, and the at least one orifice is an opening in the deflection portion.

4. Foot unit according to one of the preceding claims, wherein the at least one pin (22) comprises a first portion (22a) and a second portion (22b), wherein with respect to a longitudinal axis (Y) of the pin, the first portion (22a) is radially thickened as compared to the second portion (22b), and when the pin (22) is inserted in the at least one orifice (11), the second portion (22b) is positioned between the first portion (22a) and the deflection portion (21) of the sensing component (20).

5. Foot unit according to one of the preceding claims, wherein the orifice (11) includes a portion (11a) which widens along a dedicated insertion direction (I) of the at least one pin (22).

6. Foot unit according to one of the preceding claims, wherein the deflection portion (21) has a curved shape.

7. Foot unit according to one of the preceding claims, wherein when the suction component (10) is connected to the sensing component (20), a slot (Z) separates at least a portion of the sensing component (20) from at least a portion of the suction component (10), the slot (Z) at least partially surrounding at least a portion of the at least one pin (22).

8. Foot unit according to one of the preceding claims, wherein when the suction component (10) is connected to the sensing component (20), the suction component (10) is inclinable relative to the sensing component (20).

9. Kitchen appliance (1000) comprising and at least one foot unit (100) according to one of the preceding claims, and one or more detection means configured to detect a respective deflection of the deflection portion (21) of the at least one foot unit (20), thereby providing a weighing function of the kitchen appliance.

10. Kitchen appliance according to claim 9, further comprising a base unit (200) and/or a food receptacle (300).
